# EUROPEAN PATENT SPECIFICATION

(11) **EP 1 926 765 B1**
(45) Date of publication and mention of the grant of the patent: **04.03.2009**
(21) Application number: 06815271.9
(22) Date of filing: 22.09.2006
(51) Int. Cl.: C08G 18/28, D06M 15/576

(54) **TRIAZOLE-CONTAINING FLUORINATED URETHANES AND UREAS**
TRIAZOLHALTIGE FLUORIERTE URETHANE UND HARNSTOFFE
URÉTHANES ET URÉES FLUORÉS CONTENANT DU TRIAZOLE

(30) Priority: 22.09.2005 US 232635
(43) Date of publication of application: 04.06.2008
(73) Proprietor: E.I. DU PONT DE NEMOURS AND COMPANY, Wilmington, DE 19898 (US)
(72) Inventor: ACOSTA, Erick, Jose, New Castle DE 19720 (US); HOPKINS, Timothy, Edward, New Castle DE 19803 (US)
(74) Representative: Morf, Jan Stefan
(86) International application number: PCT/US2006/037150
(87) International publication number: WO 2007/038374

(56) References cited:
- EP-A- 0 322 759
- EP-A- 1 327 644
- EP-B1- 1 023 350

## Description

### FIELD OF THE INVENTION

The present invention relates to triazole-containing fluorinated urethanes and ureas which impart oil repellency, alcohol repellency, water repellency, soil resistance and stain resistance to treated substrates.

### BACKGROUND OF THE INVENTION

Various compositions are known to be useful as treating agents to provide surface effects to substrates. Surface effects include repellency to moisture, soil, and stains, and other effects, which are particularly useful for fibrous substrates and other substrates such as hard surfaces. Many such treating agents are fluorinated polymers or copolymers.

Del Pesco et al., in US Patent 6,479,612, describe a polymer useful for imparting oil repellency and water repellency to substrates, having at least one urea linkage derived by contacting (1) at least one polyisocyanate, or mixture of polyisocyanates, (2) at least one fluorocarbon alcohol, fluorocarbon thiol or fluorocarbon amine, (3) at least one straight or branched chain alcohol, amine or thiol, and (4) at least one alcohol containing a sulfonic acid group or its salt, and then (5) optionally at least one linking agent.

These, as well as most commercially available fluorinated polymers useful as treating agents for imparting repellency to substrates, contain predominately eight or more carbons in the perfluoroalkyl chain to provide the desired repellency properties. It is desirable to reduce the chain length of the perfluoroalkyl groups, thereby reducing the amount of fluorine present, and still achieve the same or superior surface effects. The present invention provides compositions having such shorter perfluoroalkyl chains which provide excellent repellency properties to treated substrates.

### SUMMARY OF THE INVENTION

The present invention comprises a polymer having at least one urethane or urea linkage prepared by contacting
(1) at least one diisocyanate, polyisocyanate, or mixture thereof, and
(2) at least one triazole-containing fluorinated alcohol or triazole-containing fluorinated amine, and then with
(3) water or linking agent to react with all remaining isocyanate groups.

The present invention further comprises a method of providing water repellency, alcohol repellency, oil repellency and soil repellency to substrates comprising contacting said substrate with the above described polymer.

The present invention further comprises a substrate treated with the above described polymer.

### DETAILED DESCRIPTION OF THE INVENTION

All trademarks are denoted herein by capitalization.

The terms "parts per million" or "ppm" as used herein mean micrograms per gram.

The present invention comprises triazole-containing fluorinated urethanes and triazole-containing fluorinated ureas useful in treating substrates to provide alcohol repellency, oil repellency, water repellency and soil repellency.

The triazole-containing fluorinated urethanes and ureas of the present invention comprise polymers having at least one urethane or urea linkage per molecule prepared by contacting (1) at least one diisocyanate, polyisocyanate, or mixture thereof, (2) at least one triazole-containing fluorinated alcohol, or triazole-containing fluorinated amine, and then (3) water or linking agent to react with all remaining isocyanate groups. These are hereinafter identified as Reactants 1-3. By the term "polyisocyanates" is meant di- and higher isocyanates and the term includes oligomers.

The polyisocyanate reactant (Reactant 1) provides the branched nature of the polymer. Any polyisocyanate having predominately two or more isocyanate groups, or any isocyanate precursor of a polyisocyanate having predominately two or more isocyanate groups, is suitable for use in this invention. It is recognized that minor amounts of diisocyanates may remain in products having multiple isocyanate groups. An example of this is a biuret containing residual small amounts of hexamethylene diisocyanate. Particularly preferred as Reactant 1 are hexamethylene diisocyanate homopolymers commercially available, for instance as DESMODUR N-100 from Lanxess Corporation, Pittsburgh PA.

Also suitable for use as Reactant 1 are hydrocarbon diisocyanate- derived isocyanurate trimers. Preferred is DESMODUR N-3300 (a hexamethylene diisocyanate-based isocyanurate also available from Lanxess Corporation, Pittsburgh PA). Other triisocyanates useful for the purposes of this invention are those obtained by reacting three moles of toluene diisocyanate with 1,1,1-tris-(hydroxymethyl)ethane or 1,1,1-tris- (hydroxymethyl)propane. The isocyanurate trimer of toluene diisocyanate and that of 3-isocyanatomethyl-3,4,4-trimethylcyclohexyl isocyanate are other examples of triisocyanates useful for the purposes of this invention, as is methane-tris-(phenylisocyanate). Precursors of polyisocyanate, such as diisocyanate, are also suitable for use in the present invention as substrates for the polyisocyanates.

Preferred polyisocyanate reactants are the aliphatic and aromatic polyisocyanates containing biuret structures, or polydimethyl siloxane containing isocyanates. Such polyisocyanates can also contain both aliphatic and aromatic substituents. Most preferred is the homopolymer of hexamethylene diisocyanate, DESMODUR N-100.

The triazole-containing fluorinated alcohol, or triazole-containing fluorinated amine (Reactant 2) suitable for use in the present invention has the structure of Formula 1:

R_{f}-X₁-A- X₁-Y-Z Formula 1

wherein
R_{f} is a straight or branched perfluoroalkyl group having from about 2 to about 20 carbon atoms, or a mixture thereof, which is optionally interrupted by at least one oxygen atom,
each X₁ is independently an organic divalent linking group having from about 1 to about 20 carbon atoms, optionally containing a triazole, oxygen, nitrogen, or sulfur, or a combination thereof.,
A is triazole,
Y is O, S, or N(R₂) where R₂ is H or R₁, and R₁ is an alkyl of 1 to about 4 carbon atoms, and
Z is H or an alkaline metal or alkaline earth metal.

Preferably R_{f} is a straight or branched perfluoroalkyl group having from about 4 to 20 carbon atoms, more preferably from about 4 to about 12 carbon atoms, or a mixture thereof, optionally interrupted by at least one oxygen atom.

Examples of suitable linking groups X₁ include straight chain, branched chain or cyclic alkylene, phenyl, arylene, aralkylene, sulfonyl, sulfoxy, sulfonamido, carbonamido, carbonyloxy, urethanylene, ureylene, and combinations thereof such as sulfonamidoalkylene.

A is preferably 1,4- or 1,5-disubstited triazole.

The triazole-containing fluorinated urea of the present invention is prepared by reacting a triazole-containing fluorinated alcohol or amine of formula 1 with a diisocyanate, polyisocyanate, or mixture thereof.

If Reactant 2 is not present in sufficient quantities to consume all of the isocyanate groups, the remaining isocyanate groups are then reacted with water or a linking agent (Reactant 3), thereby linking two or more isocyanate-terminated molecules together and increasing the molecular weight of the product. Suitable linking agents are compounds containing one or more hydroxy groups or one or more amine groups, or a combination thereof. While water is the most commonly used linking agent, other multi-functional compounds such as glycols are also suitable for use herein. When a linking agent other than water is selected, a stoichiometric insufficiency is used. A fluorinated diol is also suitable for use herein, such as the structure of

(HO-CH₂)₂C(CH₂-S-[CH₂]₂-C₈F₁₇)₂

An example of such a diol is LODYNE 941, available from Ciba Specialty Chemicals, High Point NC.

The triazole-containing fluorinated urethanes of the present invention are prepared in a suitable dry solvent free of groups that react with isocyanate groups. Organic solvents are employed. Ketones are the preferred solvents, and methylisobutylketone (MIBK) is particularly preferred for convenience and availability. The reaction of the alcohols with the polyisocyanate is optionally carried out in the presence of a catalyst, such as dibutyltindilaurate or tetraisopropyltitanate, typically in an amount of about 0.1 - 1.0%. A preferred catalyst is dibutyltindilaurate.

The resulting triazole-containing fluorinated urethane or urea is then diluted with water, or further dispersed or dissolved in a solvent selected from the groups comprising simple alcohols and ketones that are suitable as the solvent for final application to substrates (hereinafter the "application solvent").

Alternatively, an aqueous dispersion, made by conventional methods with surfactants, is prepared by removing solvents by evaporation and the use of emulsification or homogenization procedures known to those skilled in the art. Such solvent-free emulsions may be preferred to minimize flammability and volatile organic compounds (VOC) concerns.

The final product for application to a substrate is a dispersion (if water based) or a solution (if solvents other than water are used) of the triazole-containing fluorinated urethane or urea.

The present invention further comprises a method of providing water repellency, alcohol repellency, oil repellency and soil repellency to a substrate comprising contacting the triazole-containing fluorinated solutions or dispersions of the present invention with the substrate. Suitable substrates include fibrous or hard surface substrates as defined below.

The triazole-containing fluorinated solution or dispersion of the present invention is applied to the substrate surface by any suitable method. Such methods are well known to those skilled in the art, and include, for example, application by exhaustion, foam, flex-nip, nip, pad, kiss-roll, beck, skein, winch, liquid injection, overflow flood, roll, brush, roller, spray, dipping, immersion, and the like. It can also be applied by use of the conventional beck dyeing procedure, continuous dyeing procedure or thread-line application.

The dispersion or solution is diluted for application until the percent total fluorine in the dispersion or solution, based on the weight of the dispersion or solution, is from about 0.01% to about 20%, preferably from about 1% to about 15% by weight, and most preferably from about 2.5% to about 10% by weight.

In particular, for application to a carpet substrate, the "wet pick up" is the amount of the dispersion or solution of the present invention applied to the prewetted carpet, based on the dry weight of the carpet. A low wet pickup bath system can be interchanged with low wet pickup spray or foam systems, and a high wet pickup bath system can be interchanged with other high wet pickup systems, e.g., flex-nip system, foam, pad, or flood. The method employed determines the appropriate wet pickup and whether the application is made from one side of the carpet (spray and foam applications) or both sides (flex-nip and pad). The following Table 1 provides typical process specifications for application to carpet substrates.

**Table 1**

| Application | Typical Wet Pickup Range (%) | Preferred Wet Pickup Range (%) |
|---|---|---|
| Stain resists | | |
| Flex-nip | 150 - 350 | 200 - 300 |
| Flood | 100 - 500 | 200 - 300 |
| Foam | 20 - 200 | 50 - 150 |
| Pad | 100 - 500 | 200 - 300 |
| Spray | 20 - 200 | 50 - 150 |

| Fluorochemical soil resists | | |
|---|---|---|
| Foam | 5 - 50 | 10 - 5 |
| Spray | 5 - 50 | 10 - 15 |

Many variations of the conditions for spray, foam, flex-nip, flood, and pad applications are known to those skilled in the art and the preceding conditions are provided as examples and not are intended to be exclusive. The dispersion or solution of the present invention is typically applied to a pre-wetted carpet at a wet pick up of from about 20% to about 60%, dried at from about 150°F to about 180°F (66°C to 82°C) and preferably cured at from about 250°F to about 300°F (121°C to 149°C). Alternatively, the treated carpet can be air-dried, but this not preferred. To pre-wet the carpet, the carpet is soaked in water and the excess water suctioned off. The "wet pick up" is the amount of the dispersion or solution of the present invention applied to the prewetted carpet based on the dry weight of the carpet. After drying, the treated carpet preferably contains about 100 ppm to about 1000 ppm fluorine (about 100 to about 1000 microg/g fluorine) based on the weight of the dried carpet.

The triazole-containing fluorinated urethane or urea solution or dispersion of this invention is applied to the substrate as such, or in combination with other finishes or surface treating agents. The composition of the present invention optionally further comprises additional components such as treating agents or finishes to achieve additional surface effects, or additives commonly used with such agents or finishes. Such additional components comprise compounds or compositions that provide surface effects such as no iron, easy to iron, shrinkage control, wrinlde free, permanent press, moisture control, softness, strength, anti-slip, anti-static, anti-snag, anti-pill, stain repellency, stain release, soil repellency, soil release, water repellency, oil repellency, odor control, antimicrobial, sun protection, and similar effects. One or more such-treating agents or finishes can be combined with the blended composition and applied to the fibrous substrate. In particular for fibrous substrates, when synthetic or cotton fabrics are treated, a wetting agent can be used, such as ALKANOL 6112 available from E. I. du Pont de Nemours and Company, Wilmington, DE. When cotton or cotton-blended fabrics are treated, a wrinkle-resistant resin can be used such as PERMAFRESH EFC available from Omnova Solutions, Chester, SC.

Other additives commonly used with such treating agents or finishes may also be present such as surfactants, pH adjusters, cross linkers, wetting agents, wax extenders, and other additives known by those skilled in the art. Suitable surfactants include anionic, cationic, and nonionic. Preferred is an anionic surfactant such as sodium lauryl sulfonate, available as DUPONOL WAQE from Witco Corporation, Greenwich, CT. Examples of such finishes or agents include processing aids, foaming agents, lubricants, anti-stains, and the like. The composition is applied at a manufacturing facility, retailer location, or prior to installation and use, or on a consumer location.

Application rates for the triazole-containing fluorinated solution or dispersion of the present invention are in the range of from about 10 to about 1000 g/m² depending on the substrate porosity.

Optionally a blocked isocyanate to further promote durability can be added to the fluorinated urethane or urea of the present invention (i.e., as a blended isocyanate). An example of a suitable blocked isocyanate is HYDROPHOBAL HYDROPHOBOL XAN available from Ciba Specialty Chemicals, High Point, NJ. Other commercially available blocked isocyanates are also suitable for use herein. The desirability of adding a blocked isocyanate depends on the particular application for the treating agent. For most of the presently envisioned applications, it does not need to be present to achieve satisfactory cross-linking between chains or bonding to the substrate. When added as a blended isocyanate, amounts up to about 20% by weight may be added.

Optionally, nonfluorinated extender compositions may also be included in the application composition to obtain some combination of benefits. Examples of such an optional additional extender polymer composition is that disclosed in copending US Provisional Application 60/607,612, filed September 7, 2004 (CH-2996), and in US Serial number 11/175680 filed July 6, 2005 (CH-3048).

The present invention also comprises substrates treated with the triazole-containing fluorinate solution or dispersion of the present invention. Suitable substrates include fibrous or hard surface substrates. The fibrous substrates include woven and nonwoven fibers, yarns, fabrics, fabric blends, paper, leather, and carpets. These are made from natural or synthetic fibers including cotton, cellulose, wool, silk, polyamide, polyester, polyolefin, polyacrylonitrile, polypropylene, rayon, nylon, aramid, and acetate. By "fabric blends" is meant fabric made of two or more types of fibers. Typically these blends are a combination of at least one natural fiber and at least one synthetic fiber, but also can include a blend of two or more natural fibers or of two or more synthetic fibers. The hard surface substrates include porous and non-porous mineral surfaces, such as glass, stone, masonry, concrete, unglazed tile, brick, porous clay and various other substrates with surface porosity. Specific examples of such substrates include unglazed concrete, brick, tile, stone (including granite and limestone), grout, mortar, marble, limestone, statuary, monuments, wood, composite materials such as terrazzo, and wall and ceiling panels including those fabricated with gypsum board. These are used in the construction of buildings, roads, parking ramps, driveways, floorings, fireplaces, fireplace hearths, counter tops, and other decorative uses in interior and exterior applications.

The triazole-containing fluorinated urethane or urea compositions of the present invention are useful to provide excellent water repellency, alcohol repellency, oil repellency and soil repellency to treated substrates. These excellent repellency properties are obtained using shorter perfluoroalkyl chain lengths of the fluorinated component compared with conventional perfluorocarbon surface treatments, yet provide comparable or superior protection of treated surfaces. The triazole-containing fluorinated urethane and urea of the present invention allows for the use of shorter fluoroalkyl groups containing six or fewer carbon atoms. Conventional commercially available urethanes typically contain C₈ and higher fluoroalkyl chains to achieve repellency in the treated substrates.

### MATERIALS AND TEST METHODS

The following materials and test methods were used in the examples herein.

Carpet Material. The carpet materials used were a commercial level loop (LL) 1245 denier, 1/10 gauge (0.1 inch or 2.5 mm tuft separation), 28.5 oz/yd² (0.97 kg/m²), dyed pale yellow, and a-residential tan dyed level loop (LL) 1245 denier, 1/10 gauge (0.1 inch or 2.5 mm tuft separation), 30 oz/yd² (1.02 kg/m²), treated with 4% SR-500 (available from E. I. du Pont de Nemours and Company, Wilmington, DE.), both carpets are available from Invista Inc., Wilmington DE. Carpet samples, 8.00 x 8.00-inch (20.4 x 20.4 cm) of commercial carpet, or 8.00 x 8.00-inch (20.4 x 20.4 cm) of residential carpet were cut and placed pile side up on a non-absorbent surface. The pile was cleaned of any unattached materials by vacuuming.

### Test Method 1 - Water Repellency

The water repellency of a treated substrate was measured according to AATCC standard Test Method No. 193-2004 and the DuPont Technical Laboratory Method as outlined in the TEFLON Global Specifications and Quality Control Tests information packet. The test determines the resistance of a treated substrate to wetting by aqueous liquids. Drops of water-alcohol mixtures of varying surface tensions are placed on the substrate and the extent of surface wetting is determined visually. The test provides a rough index of aqueous stain resistance. The higher the water repellency rating, the better the resistance of a finished substrate to staining by water-based substances.

The composition of water repellency test liquids is shown in table 2.

**Table 2. Water Repellency Test Liquids**

| Water Repellency | Composition, | Vol % |
|---|---|---|
| Rating Number | Isopropyl Alcohol | Distilled Water |
| 1 | 2 | 98 |
| 2 | 5 | 95 |
| 3 | 10 | 90 |
| 4 | 20 | 80 |
| 5 | 30 | 70 |
| 6 | 40 | 60 |
| 7 | 50 | 50 |
| 8 | 60 | 40 |
| 9 | 70 | 30 |
| 10 | 80 | 20 |
| 11 | 90 | 10 |
| 12 | 100 | 0 |

### Testing procedure:

Three drops of Test Liquid 1 are placed on the treated substrate. After 10 seconds, the drops are removed by using vacuum aspiration. If no liquid penetration or partial absorption (appearance of a darker wet patch on the substrate) is observed, the test is repeated with Test Liquid 2. The test is repeated with Test Liquid 3 and progressively higher Test Liquid numbers until liquid penetration (appearance of a darker wet patch on the substrate) is observed. The test result is the highest Test Liquid number that does not penetrate into the substrate. Higher scores indicate greater repellency.

### Test Method 2 - Oil Repellency

The treated samples were tested for oil repellency by a modification of AATCC standard Test Method No. 118, conducted as follows. A substrate treated with an aqueous dispersion of polymer as previously described, is conditioned for a minimum of 2 hours at 23°C + 20% relative humidity and 65°C + 10% relative humidity. A series of organic liquids, identified below in Table 3, are then applied dropwise to the samples. Beginning with the lowest numbered test liquid (Repellency Rating No. 1), one drop (approximately 5 mm in diameter or 0.05 mL volume) is placed on each of three locations at least 5 mm apart. The drops are observed for 30 seconds. If, at the end of this period, two of the three drops are still spherical in shape with no wicking around the drops, three drops of the next highest numbered liquid are placed on adjacent sites and similarly observed for 30 seconds. The procedure is continued until one of the test liquids results in two of the three drops failing to remain spherical to hemispherical, or wetting or wicking occurs.

The oil repellency rating is the highest numbered test liquid for which two of the three drops remained spherical to hemispherical, with no wicking for 30 seconds. In general, treated samples with a rating of 5 or more are considered good to excellent; samples having a rating of one or greater can be used in certain applications.

**Table 3. Oil Repellency Test Liquids**

| Oil Repellency Rating Number | Test Solution |
|---|---|
| 1 | NUJOL Purified Mineral Oil |
| 2 | 65/35 NUJOL/n-hexadecane by volume at 21°C |
| 3 | n-hexadecane |
| 4 | n-tetradecane |
| 5 | n-dodecane |
| 6 | n-decane |
| 7 | n-octane |
| 8 | n-heptane |

| | |
|---|---|
| Note: NUJOL is a trademark of Plough, Inc., for a mineral oil having a Saybolt viscosity of 360/390 at 38°C and a specific gravity of 0.880/0.900 at 15°C. | |

### Test Method 3. Accelerated Soiling Drum Test.

Carpet specimens were mounted onto the inside of a metal drum with the pile toward the center of the drum, using either 2-sided adhesive tape and/or mechanical clamps, until the inside surface was completely covered by carpet. A Hexapod metal drum was used for assessing accelerated carpet mechanical wear having the following dimensions.

| Metal Drum Unit | Hexapod |
|---|---|
| Internal drum diameter | 8 inches (20.3 cm) |
| Internal drum depth | 3.5 inches (8.9 cm) |
| Dirty resin pellets | 250 mL |
| Soiling time | 3 min. |

Into the drum was then placed a volume of "dirty SURLYN ionomer resin -pellets" and 250 mL volume of 5/16 inch (0.79 cm) ball bearings. "Dirty SURLYN ionomer resin pellets" are made by blending 1L SURLYN 8528 ionomer resin pellets with 20 g of synthetic soil (AATCC Method 123-1988). SURLYN 8528 ionomer is an ethylene/methacrylic acid copolymer, partial sodium or zinc salt, and is available from E. I. du Pont de Nemours and Company, Wilmington, DE. The drum was then closed and rolled on a roller-type drum mill for a few minutes. The carpet samples were then removed from the drum and cleaned with a canister-type vacuum cleaner. The degree of soiling was measured with a Minolta Chroma Meter CR 200 by determining the difference in darkness as "Delta E" between the unsoiled control and the soiled carpet sample. Values of "E" are measured according to the manufacturer's directions. A "Delta E" unit of 1 is significant when compared to visual evaluation. The lower the "Delta E" value, the lower the soiling.

### EXAMPLES

### Example 1

In a round bottom flask of 8-azido-1,1,1,2,2,3,3,4,4,5,5,6,6-tridecafluorooctane (80.0 g, 0.206 mol), copper turnings (0.5 g) and propargyl alcohol (11.5 g, 0.206 mol) were added and the reaction mixture was stirred vigorously for 12 hours. Completion of the reaction was evident by the transformation of the liquid mixture into a white solid. The solid was dissolved in 100 mL of methanol and filtered to remove the copper metal, followed by flashing the solution through silica gel to remove any soluble copper salts. The solvent was evaporated to yield (1-(3,3,4,4,5,5,6,6,7,7,8,8,8-tridecafluorooctyl)-1H-1,2,3-triazol-4-yl)methanol, (86% yield) as a white powder.

This product, referred herein as C6-Triazole-OH, was used in the preparation of a triazole-containing fluorinated urethane dispersion. In a 500 mL 3-neck round bottom flask equipped with an addition funnel, condenser with nitrogen inlet, and temperature probe was added 11.15 gm of DESMODUR N100 (63 % in MIBK) and C6-Triazole-OH (13.38 g, 30.16 mmol) dissolved in 30 gm MIBK. To this was added 0.71 gm dibutyltin dilaurate solution (0.004 g/ g MIBK) slowly through an addition funnel. The reaction was heated to 90 °C for 8 hours, followed by the addition of deionized water (30 g) and heating for two hours at 65 °C. 35.89 g of surfactant solution (7.5 % ARQUAD 16-50 and 1.7 % ETHOX TDA-5 by weight, both are available from Akzo Nobel Chemicals, Inc., Arnhem, Netherlands) and 30 g of deionized water was then added to the molten material. The suspension was homogenized using a digital sonifier for 5 minutes yielding a stable dispersion. The MIBK was stripped off via vacuum distillation to yield a dispersion that was 12.8 % solids and 4.24 % fluorine.

### Example 2

Sodium azide (312.0 g, 4.81 mol) and tetrabutylammonium bromide (29.6 g, 0.032 mol) were dissolved in 500 mL of water and transferred to a 3000-mL reactor. To this was added 1,1,1,2,2,3,3,4,4-nonafluoro-6-iodohexane (1500 g) and the reaction mixture was stirred vigorously at 95 ± 5 °C until the reaction was determined complete by GC. After all the 1,1,1,2,2,3,3,4,4-nonafluoro-6-iodohexane was consumed, the reaction mass was cooled, filtered and the solute was washed five times with 100-mL portions of deionized water to remove residual sodium azide. The solution was dried over magnesium sulfate and distilled under vacuum to yield 6-azido-1,1,1,2,2,3,3,4,4-monafluorohexane as a clear liquid in 52% yield and purity of 99%.

To a round bottom flask, 6-azido-1,1,1,2,2,3,3,4,4-nonafluorohexane (50.0 g, 0.17 mol) of Example 7, propargyl alcohol (9.5 g, 0.17 mol) and 0.5 g of copper turnings were added and stirred vigorously for 12 hours. The completion of the reaction was confirmed by the transformation of the liquid reaction mixture into a white solid. The crude product was dissolved in methanol (50 mL) and flashed through silica gel, using methanol as an eluent. The methanol was removed via vacuum to yield (1-(3,3,4,4,5,5,6,6, -nonafluorohexyl)-1H-1,2,3-triazol-4-yl)methanol as a white powder in 90% yield and with high purity (98%).

This product, referred to herein as C4-Triazole-OH, was used in the preparation of a triazole-containing fluorinated urethane dispersion. In a 500 mL 3-neck round bottom flask equipped with an addition funnel, condenser with nitrogen inlet, and temperature probe was added 11.4 gm of DESMODUR N100 (63 % in MIBK) and C4-Triazole-OH (10.35 g, 30 mmol) dissolved in 30 g MIBK. To this was added 0.71 gm dibutyltin dilaurate solution (0.004 g/ g MIBK) slowly through an addition funnel. The reaction was heated to 90°C for 4 hours, followed by the addition of 0.45 g deionized water in 13 g of MIBK and heating for one hour at 90 °C. The suspension was mixed with 61.3 g of a 7.9 % solution of WITCO-C-6094 (available form Witco Corporation, GREENWICH, Connecticut) and dispersed using the above procedure to give a product with 30.3 % solids and 9.2 % fluorine.

### Example 3

The water repellency, oil repellency and soil resist performance testing was performed using spray application of the C6 triazole-containing fluorinated urethane dispersion of Example 1 at pH 6-8 on a 1245 LL commercial carpet, 28.5 oz/yd² (0.97 kg/m²), dyed pale yellow. A concentration of 600 ppm (600 mg/kg) fluorine was applied to the carpet, based on the dry carpet (pile) weight, for the soil resist tests. The 8" x 8" (20.4 x 20.4 cm) carpet samples were pre-wetted with 3 g water and sprayed with 9.82 g solution (25% wet pick up). The solution was worked in with a roller and oven dried at about 170°F (76.7°C), then cured at 250°F (124°C). The treated commercial carpet samples were tested for the water repellency and oil repellency using Test Methods 1 and 2. The carpet samples were also tested for soil resist performance using Test Methods 3. Results are in Table 4, labeled as the C6-Triazole-Urethane treated sample.

The same procedure above was repeated on a residential tan dyed carpet, level loop (LL) 1245 denier, 1/10 gauge (0.1 inch or 2.5 mm tuft separation), 30 oz/yd² (1.02 kg/m²), treated with 4% SR-500. A concentration of 400 ppm (400 mg/kg) fluorine was applied to the carpet, based on the dry carpet (pile) weight, for the soil resist tests. The 8" x 8" (20.4 x 20.4 cm) carpet samples were prewetted with 3 g water and sprayed with 10.50 g solution (25% wet pick up). The treated residential carpet samples were tested for the water repellency and oil repellency using Test Methods 1 and 2. The residential carpet samples were also tested for soil resist performance using Test Methods 3. Results are in Table 5, labeled as the C6-Triazole-Urethane treated sample.

### Example 4

The procedure of Example 3 was repeated. The same carpet samples as in Example were used for the water repellency, oil repellency and soil resist performance testing by spray application of the C4 triazole-containing fluorinated urethane dispersion of Example 2. Results are in Table 4 for the commercial carpet and in Table 5 for the residential carpet, labeled as the C4-Triazole-Urethane treated samples.

### Comparative Examples A1/A2

In Comparative Example A1, the procedure of Example 3 was repeated using untreated commercial carpet samples of Example 3. Results are in Table 4, labeled as the Untreated sample.

In Comparative Example A2, the procedure of Example 3 was repeated using untreated residential carpet samples of Example 3. Results are in Table 5, labeled as the Untreated sample.

### Comparative Examples B1/B2

In Comparative Example B1, the procedure of Example 3 was repeated using commercial carpet samples treated with N130 (a fluorinated urethane-based surface treatment agent, which is commercially available from E. I. du Pont de Nemours and Company, Wilmington, DE). Results are in Table 4.

In Comparative Example B2, the procedure of Example 3 was repeated using residential carpet samples treated with N130 (a fluorinated urethane-based surface treatment agent, which is commercially available from E. I. du Pont de Nemours and Company, Wilmington, DE). Results are in Table 5.

**Table 4. Water Repellency, Oil Repellency and Soil Resist on Commercial Carpet**

| | Treating Agent | Water Repellency | Oil Repellency | Soiling Delta E |
|---|---|---|---|---|
| F Loading, %F | | 600 ppm | 600 ppm | 600 ppm |

| Example | | | | |
|---|---|---|---|---|
| Comparative A1 | Untreated | 0 | 0 | 27.38 |
| Comparative B1 | N130 | 6 | 4 | 21.87 |
| 3 | C6-Triazole-Urethane | 5 | 3 | 21.38 |
| 4 | C4-Triazole-Urethane | 4 | 3 | 21.78 |

Table 4 shows that Comparative Example A1 (untreated commercial carpet) provided no oil or water repellency while with application of the compositions of Examples 3 and 4, a significant improvement in the surface properties of the carpet was observed. Water repellency values were enhanced from 0 (Comparative Example A1) to 5 and 4 respectively for Examples 3 and 4. In a similar fashion, oil repellency was improved from 0 (untreated Comparative Example A1) to a value of 3 for both Examples 3 and 4. Soil repellency for the carpets treated with Examples 3 and 4 also proved to be superior to Comparative Example A1. The overall repellency performance of Examples 3 and 4 was comparable to the commercial product N130.

**Table 5. Water Repellency, Oil Repellency and Soil Resist on Residential Carpet**

| | Treating Agent | Water Repellency | Oil Repellency | Soiling Delta E |
|---|---|---|---|---|
| F Loading, %F | | 400 ppm | 400 ppm | 400 ppm |

| Example | | | | |
|---|---|---|---|---|
| Comparative A2 | Untreated | 0 | 0 | 21.83 |
| Comparative B2 | N130 | 5 | 4 | 17.28 |
| 3 | C6-Triazole-Urethane | 6 | 5 | 17.88 |
| 4 | C4-Triazole-Urethane | 5 | 0 | 19.09 |

Table 5 shows that untreated residential carpet provided no oil or water repellency; however, after application of Example 4 or Example 3, a significant improvement on the surface properties of the carpet was observed. Water repellency values were enhanced from 0 (untreated carpet) to 6 and 5 for carpet treated with Examples 3 and Example 4 respectively. In a similar fashion, oil repellency was improved from 0 (untreated carpet) to a value of 5 for carpet treated with Example 3. However, no oil repellency was observed for the carpet treated with Example 4. This result indicated that the construction of residential carpet rendered it more difficult to achieve effective oil repellency. Soil repellency for the carpets treated with Examples 3 and 4 also proved to be superior to untreated carpets. The overall repellency performance of Example 2 was comparable to the commercial product N130. Carpet treated with Example 4 demonstrated poor oil repellency but water and soil repellency was similar to that of N130.

## Claims

1. A polymer having at least one urethane or urea linkage prepared by contacting
(1) at least one diisocyanate, polyisocyanate, or mixture thereof, and
(2) at least one triazole-containing fluorinated alcohol or triazole-containing fluorinated amine, and then with
(3) water or linking agent to react with all remaining isocyanate groups.

2. The polymer of claim 1 wherein the diisocyanate is hexamethylene diisocyanate, and wherein the linking agent is a glycol.

3. A polymer of claim 1 wherein the alcohol or amine is of Formula 1
R_{f}-X₁-A- X₁-Y-Z Formula 1
wherein
R_{f} is a straight or branched perfluoroalkyl group having from about 2 to about 20 carbon atoms, or a mixture thereof, which is optionally interrupted by at least one oxygen atom,
each X₁ is independently an organic divalent linking group having from about 1 to about 20 carbon atoms, optionally containing a triazole, oxygen, nitrogen, or sulfur, or a combination thereof,
A is triazole,
Y is O, S, or N(R₂ ) where R₂ is H or R₁, and R₁ is an alkyl of 1 to about 4 carbon atoms and
Z is H, alkaline metal, or alkaline earth metal.

4. The polymer of claim 3 wherein R_{f} is a perfluoroalkyl radical having the formula F(CF₂CF₂)ₙ, wherein n is 1 to about 10, or mixtures thereof.

5. The polymer of claim 3 wherein X₁ is selected from the group consisting of a straight chain, branched chain or cyclic alkylene, phenyl, arylene, aralkylene, sulfonyl, sulfoxy, sulfonamido, carbonamido, carbonyloxy, urethanylene, ureylene, and combinations thereof, and wherein Y is N, O or NH.

6. The polymer of claim 1 further comprising an agent providing at least one surface effect selected from the group consisting of no iron, easy to iron, shrinkage control, wrinkle free, permanent press, moisture control, softness, strength, anti-slip, anti-static, anti-snag, anti-pill, stain repellency, stain release, soil repellency, soil release, water repellency, oil repellency, odor control, antimicrobial, and sun protection.

7. The polymer of claim 1 further comprising a surfactant, pH adjuster, cross linker, wetting agent, blocked isocyanate, wax extender, or hydrocarbon extender.

8. A method of providing water repellency, alcohol repellency, oil repellency, and soil repellency to substrates comprising contacting said substrate with a polymer having at least one urethane or urea linkage prepared by contacting
(1) at least one diisocyanate, polyisocyanate, or mixture thereof, and
(2) at least one triazole-containing fluorinated alcohol or triazole-containing fluorinated amine, and then with
(3) water or linking agent to react with all remaining isocyanate groups.

9. The method of claim 8 wherein the polymer is applied as an aqueous dispersion or solution by means of exhaustion, spray, foam, flex-nip, nip, pad, kiss-roll, beck, skein, winch, liquid injection, overflow flood, brush, roll, spray or immersion.

10. The method of claim 8 wherein the polymer is applied in the presence of an agent providing at least one surface effect selected from the group consisting of no iron, easy to iron, shrinkage control, wrinkle free, permanent press, moisture control, softness, strength, anti-slip, anti-static, anti-snag, anti-pill, stain repellency, stain release, soil repellency, soil release, water repellency, oil repellency, odor control, antimicrobial, and sun protection.

11. A substrate to which has been applied a polymer having at least one urethane or urea linkage prepared by contacting
(1) at least one diisocyanate, polyisocyanate, or mixture thereof, and
(2) at least one triazole-containing fluorinated alcohol or triazole-containing fluorinated amine, and then with
(3) water or linking agent to react with all remaining isocyanate groups.

## Patentansprüche

1. Polymer mit mindestens einer Urethan- oder Harnstoffverknüpfung, hergestellt durch Inkontaktbringen von
(1) mindestens einem Diisocyanat, Polyisocyanat oder Gemisch davon und
(2) mindestens einem triazolhaltigen fluorierten Alkohol oder triazolhaltigen fluorierten Amin und dann mit
(3) Wasser oder Verknüpfungsmittel, um mit allen verbleibenden Isocyanatgruppen zu reagieren.

2. Polymer nach Anspruch 1, wobei das Diisocyanat Hexamethylendiisocyanat ist und wobei das Verknüpfungsmittel ein Glycol ist.

3. Polymer nach Anspruch 1, wobei der Alkohol oder das Amin Formel 1
R_{f}-X₁-A-X₁-Y-Z Formel 1
hat, wobei
R_{f} eine gerade oder verzweigte Perfluoralkylgruppe mit von etwa 2 bis etwa 20 Kohlenstoffatomen oder einem Gemisch davon ist, welche gegebenenfalls durch mindestens ein Sauerstoffatom unterbrochen ist,
jedes X₁ unabhängig eine organische zweiwertige Verknüpfungsgruppe mit von etwa 1 bis etwa 20 Kohlenstoffatomen, gegebenenfalls enthaltend ein Triazol, Sauerstoff, Stickstoff oder Schwefel oder eine Kombination davon, ist,
A Triazol ist,
Y O, S oder N(R₂) ist, wo R₂ H oder R₁ ist und R₁ ein Alkyl mit 1 bis etwa 4 Kohlenstoffatomen ist, und
Z H, Alkalimetall oder Erdalkalimetall ist.

4. Polymer nach Anspruch 3, wobei R_{f} ein Perfluoralkylrest mit der Formel F(CF₂CF₂)ₙ ist, wobei n 1 bis etwa 10 ist, oder Gemische davon.

5. Polymer nach Anspruch 3, wobei X₁ aus der Gruppe, bestehend aus einem geradkettigen, verzweigtkettigen oder cyclischen Alkylen, Phenyl, Arylen, Aralkylen, Sulfonyl, Sulfoxy, Sulfonamido, Carbonamido, Carbonyloxy, Urethanylen, Ureylen und Kombinationen davon, ausgewählt ist und wobei Y N, O oder NH ist.

6. Polymer nach Anspruch 1, weiterhin umfassend ein Mittel, bereitstellend mindestens eine Oberflächenwirkung, ausgewählt aus der Gruppe, bestehend aus bügelfrei, bügelleicht, Einlaufkontrolle, knitterfrei, formbeständig, Feuchtigkeitsregelung, Weichheit, Festigkeit, Antirutsch, antistatisch, gegen Fadenziehen, Antipill, Fleckenabweisungsvermögen, Fleckenentfernbarkeit, Schmutzabweisungsvermögen, Schmutzentfernbarkeit, Wasserabweisungsvermögen, Ölabweisungsvermögen, Geruchsbekämpfung, antimikrobiell und Sonnenschutz.

7. Polymer nach Anspruch 1, weiterhin umfassend ein Tensid, pH-Einstellungsmittel, Vernetzungsmittel, Benetzungsmittel, blockiertes Isocyanat, Wachsstreckungsmittel oder Kohlenwasserstoffstreckungsmittel.

8. Verfahren zum Bereitstellen von Wasserabweisungsvermögen, Alkoholabweisungsvermögen, Ölabweisungsvermögen und Schmutzabweisungsvermögen für Substrate, umfassend Inkontaktbringen des Substrats mit einem Polymer mit mindestens einer Urethan- oder Harnstoffverknüpfung, hergestellt durch Inkontaktbringen von
(1) mindestens einem Diisocyanat, Polyisocyanat oder Gemisch davon und
(2) mindestens einem triazolhaltigen fluorierten Alkohol oder triazolhaltigen fluorierten Amin und dann mit
(3) Wasser oder Verknüpfungsmittel, um mit allen verbleibenden Isocyanatgruppen zu reagieren.

9. Verfahren nach Anspruch 8, wobei das Polymer als wässerige Dispersion oder Lösung mittels Ausziehen, Sprühen, Schäumen, Flex-Nip, Quetschen, Klotzen, Tauchwalze, Bottich, Docke, Winde, Flüssigeinspritzung, Overflow-Flood, Bürste, Walze, Sprühen oder Eintauchen aufgebracht wird.

10. Verfahren nach Anspruch 8, wobei das Polymer in Gegenwart eines Mittels, bereitstellend mindestens eine Oberflächenwirkung, ausgewählt aus der Gruppe, bestehend aus bügelfrei, bügelleicht, Einlaufkontrolle, knitterfrei, formbeständig, Feuchtigkeitsregelung, Weichheit, Festigkeit, Antirutsch, antistatisch, gegen Fadenziehen, Antipill, Fleckenabweisungsvermögen, Fleckenentfernbarkeit, Schmutzabweisungsvermögen, Schmutzentfernbarkeit, Wasserabweisungsvermögen, Ölabweisungsvermögen, Geruchsbekämpfung, antimikrobiell und Sonnenschutz, aufgebracht wird.

11. Substrat, auf welches ein Polymer mit mindestens einer Urethan- oder Harnstoffverknüpfung, hergestellt durch Inkontaktbringen von
(1) mindestens einem Diisocyanat, Polyisocyanat oder Gemisch davon und
(2) mindestens einem triazolhaltigen fluorierten Alkohol oder triazolhaltigen fluorierten Amin und dann mit
(3) Wasser oder Verknüpfungsmittel, um mit allen verbleibenden Isocyanatgruppen zu reagieren,
aufgebracht worden ist.

## Revendications

1. Polymère ayant au moins une liaison urée ou uréthane préparé par mise en contact
(1) d'au moins un diisocyanate, polyisocyanate, ou mélange de ceux-ci, et
(2) d'au moins un alcool fluoré contenant un triazole ou d'au moins une amine fluorée contenant un triazole, et ensuite avec
(3) de l'eau ou un agent de liaison pour réagir avec tous les groupes isocyanates restants.

2. Polymère selon la revendication 1 dans lequel le diisocyanate est l'hexaméthylènediisocyanate, et dans lequel l'agent de liaison est un glycol.

3. Polymère selon la revendication 1 dans lequel l'alcool ou l'amine répond à la formule 1
R_{f}-X₁-A-X₁-Y-Z formule 1
dans laquelle
R_{f} représente un groupe perfluoroalkyle linéaire ou ramifié ayant environ 2 à environ 20 atomes de carbone, ou un mélange de tels groupes, qui est éventuellement interrompu par au moins un atome d'oxygène,
chaque X₁ représente indépendamment un groupe de liaison divalent organique ayant environ 1 à environ 20 atomes de carbone, et contenant éventuellement un triazole, oxygène, azote, ou soufre, ou une combinaison de ceux-ci,
A représente un triazole,
Y représente O, S, ou N(R₂) où R₂ représente H ou R₁, et R₁ représente un groupe alkyle de 1 à environ 4 atomes de carbone et
Z représente H, un métal alcalin, ou un métal alcalino-terreux.

4. Polymère selon la revendication 3 dans lequel R_{f} représente un radical perfluoroalkyle ayant pour formule F(CF₂CF₂)ₙ, dans laquelle n vaut 1 à environ 10, ou des mélanges de tels radicaux.

5. Polymère selon la revendication 3 dans lequel X₁ est choisi dans le groupe constitué des groupes alkylène, phényle, arylène, aralkylène, sulfonyle, sulfoxy, sulfonamido, carbonamido, carbonyloxy, uréthanylène, uréylène, à chaîne linéaire, à chaîne ramifiée, ou cycliques, et leurs combinaisons, et dans lequel Y représente N, O ou NH.

6. Polymère selon la revendication 1 comprenant en outre un agent conférant au moins un effet de surface choisi dans le groupe constitué des effets suivants : repassage inutile, repassage facile, résistance au rétrécissement, anti-plis, anti-froissement, régulation de l'humidité, douceur, résistance, anti-glissement, anti-électricité statique, anti-démaillage, anti-boulochage, anti-taches, détachage facile, anti-salissures, élimination facile des salissures, imperméabilité à l'eau, imperméabilité à l'huile, contrôle des odeurs, antimicrobien, et protection solaire.

7. Polymère selon la revendication 1 comprenant en outre un tensioactif, un agent d'ajustement du pH, un réticulant, un agent mouillant, un isocyanate bloqué, un diluant à base de cire, ou un diluant hydrocarboné.

8. Procédé pour conférer à des substrats imperméabilité à l'eau, imperméabilité aux alcools, imperméabilité à l'huile et imperméabilité aux salissures, consistant à mettre en contact ledit substrat avec un polymère ayant au moins une liaison urée ou uréthane préparé par mise en contact
(1) d'au moins un diisocyanate, polyisocyanate, ou mélange de ceux-ci, et
(2) d'au moins un alcool fluoré contenant un triazole ou d'au moins une amine fluorée contenant un triazole, et ensuite avec
(3) de l'eau ou un agent de liaison pour réagir avec tous les groupes isocyanates restants.

9. Procédé selon la revendication 8 dans lequel le polymère est appliqué sous forme de dispersion ou solution aqueuse au moyen d'une aspiration, d'une pulvérisation, de mousse, d'un applicateur à contact à flexion, de cylindres presseurs, d'un foulard, d'un rouleau lécheur, d'une barque à tourniquet, d'un écheveau, d'une cuve à tourniquet, d'une injection de liquide, d'une inondation par débordement, d'une brosse, d'un cylindre, d'un pulvérisateur ou d'une immersion.

10. Procédé selon la revendication 8 dans lequel le polymère est appliqué en présence d'un agent conférant au moins un effet de surface choisi dans le groupe constitué des effets suivants : repassage inutile, repassage facile, résistance au rétrécissement, anti-plis, anti-froissement, régulation de l'humidité, douceur, résistance, anti-glissement, anti-électricité statique, anti-démaillage, anti-boulochage, anti-taches, détachage facile, anti-salissures, élimination facile des salissures, imperméabilité à l'eau, imperméabilité à l'huile, contrôle des odeurs, antimicrobien, et protection solaire.

11. Substrat sur lequel a été appliqué un polymère ayant au moins une liaison urée ou uréthane préparé par mise en contact
(1) d'au moins un diisocyanate, polyisocyanate, ou mélange de ceux-ci, et
(2) d'au moins un alcool fluoré contenant un triazole ou d'au moins une amine fluorée contenant un triazole, et ensuite avec
(3) de l'eau ou un agent de liaison pour réagir avec tous les groupes isocyanates restants.
